# EUROPÄISCHE PATENTSCHRIFT

(11) **EP 2 486 251 B1**
(45) Veröffentlichungstag und Bekanntmachung des Hinweises auf die Patenterteilung: **26.08.2015**
(21) Anmeldenummer: 10754281.3
(22) Anmeldetag: 07.09.2010
(51) Int. Cl.: F01L 1/02, F01L 1/053, F01M 11/02, F16F 15/26, F02B 67/06, F02F 7/00

(54) **MODUL ZUM AUSGLEICH VON MASSENKRÄFTEN UND/ODER MOMENTEN EINER BRENNKRAFTMASCHINE, BRENNKRAFTMASCHINE**
MODULE FOR COMPENSATING FOR INERTIAL FORCES AND/OR TORQUES OF AN INTERNAL COMBUSTION ENGINE, AND INTERNAL COMBUSTION ENGINE
MODULE POUR COMPENSER DES FORCES INERTIELLES ET/OU DES COUPLES D'UN MOTEUR À COMBUSTION INTERNE, MOTEUR À COMBUSTION INTERNE

(30) Priorität: 07.10.2009 DE 202009017859 U
(43) Veröffentlichungstag der Anmeldung: 15.08.2012
(73) Patentinhaber: Magna Powertrain Hückeswagen GmbH, 42499 Hückeswagen (DE)
(72) Erfinder: EICKELER, Udo, 58452 Witten (DE); CRAMER, Sebastian, 50259 Pulheim (DE); KLAAR, Roland Kurt, 42929 Wermelskirchen (DE)
(74) Vertreter: Rausch, Gabriele
(86) Internationale Anmeldenummer: PCT/EP2010/005488
(87) Internationale Veröffentlichungsnummer: WO 2011/042099

(56) Entgegenhaltungen:
- EP-A2- 1 316 711
- EP-A2- 1 867 862
- DE-A1-102004 028 936
- DE-A1-102006 029 554

## Beschreibung

Die Erfindung betrifft ein Modul zum Ausgleich von Massenkräften und/oder Momenten einer Brennkraftmaschine gemäß Oberbegriff des Anspruchs 1, sowie eine Brennkraftmaschine, insbesondere Hubkolbenmotor für Kraftfahrzeuge, gemäß Oberbegriff des Anspruchs 13.

Module sowie Brennkraftmaschinen der eingangs genannten Art sind aus dem Stand der Technik bekannt. So offenbart beispielsweise die internationale Veröffentlichungsschrift WO 98/28555 ein Modul, das an das Kurbelgehäuse einer Brennkraftmaschine montierbar ist und als Träger für eine Ausgleichswelle dient. Das Modul stellt dabei für die Ausgleichswelle Gleitlager bereit, wobei die Ausgleichswelle an einem Stirnende des Grundkörpers des Moduls vorsteht und auf dem vorstehenden Bereich ein Antriebsrad angeordnet ist, das mit einem von einer Kurbelwelle angetriebenen, als Kettentrieb ausgebildeten Endloszugmittel angetrieben wird. Die Ausgleichswelle dient dazu, freie Massenkräfte und/oder Momente der Brennkraftmaschine zu reduzieren oder zu kompensieren, um insbesondere das Betriebsgeräusch und Vibrationen der Brennkraftmaschine zu reduzieren. Bekannte Ausgleichswellen weisen hierzu Unwuchten auf, die in Rotation versetzt den durch die Brennkraftmaschine erzeugten Massenkräften/Momenten entgegenwirken. Wie aus der genannten Veröffentlichungsschrift weiter entnehmbar, ist es ferner bekannt, an dem Grundkörper des Moduls eine Ölpumpe vorzusehen, die zu ihrem Antrieb ein zweites Antriebsrad aufweist, das in einer gemeinsamen Ebene mit dem ersten Antriebsrad der Ausgleichswelle angeordnet ist. Durch das Anordnen des ersten Antriebsrads und des zweiten Antriebsrads in einer (gedachten) gemeinsamen Ebene ist es möglich, beide Komponenten (Ausgleichswelle und Ölpumpe) des Moduls unter Verwendung nur eines Endloszugmittels anzutreiben. Das Endloszugmittel umschlingt dazu das erste und das zweite Antriebsrad des Moduls und wird zum Antrieb der Komponenten ein Abtriebsrad der Kurbelwelle einer Brennkraftmaschine umschlingend an der Brennkraftmaschine angeordnet. Das Anordnen der Antriebsräder in einer Ebene ermöglicht hierdurch eine kompakte und einfache Gestaltung des Moduls beziehungsweise einer das Modul aufweisenden Brennkraftmaschine. Die Antriebsräder sind bekanntermaßen im Wesentlichen außerhalb des Grundkörpers angeordnet, sodass bei der Montage des Moduls an einer Brennkraftmaschine das Endloszugmittel auf einfache Art und Weise um die Antriebsräder und gegebenenfalls das Abtriebsrad einer Kurbelwelle geschlungen werden kann.

Nachteilig bei den bekannten Modulen und Brennkraftmaschinen ist die Schmierung der Antriebsseite, also der Antriebsräder und des Endloszugmittels. Hierbei sind zwei wesentliche Ausführungsformen bekannt. Bei der einen wird ein Schmiermittelsystem bereitgestellt, das beispielsweise durch die Ölpumpe bedient wird und Schmiermittel an unterschiedlichen Stellen auf der Antriebsseite, beispielsweise mittels Dosierventilen, zur Verfügung stellt. Dies bedarf jedoch aufwendiger Schmiermittelleitungen und einer entsprechend dimensionierten Ölpumpe. Die zweite bekannte Ausführungsform sieht vor, dass der Grundkörper des Moduls zumindest bereichsweise in ein Ölbad einer der Brennkraftmaschine zugehörigen Ölwanne eingetaucht wird, sodass die Antriebsräder zumindest bereichsweise in dem Ölbad liegen und rotieren. Hierdurch wird eine Selbstschmierung der Antriebsseite gewährleistet. Nachteilig hierbei ist jedoch, dass insbesondere durch die in den Ölbad rotierenden Antriebsräder und gegebenenfalls vorgesehenen Umlenkräder, Spannräder und/oder nicht achssymmetrischen Ausgleichswelle das in der Ölwanne befindliche Öl verschäumt wird. Dies kann unter Umständen bis zur Zerstörung der Brennkraftmaschine führen. Derartige Lösungen sind z.B. aus den DE 10 2006 029 554 A1 und EP 1 867 862 A2 bekannt.

Aufgabe der vorliegenden Erfindung ist es daher, ein Modul und eine Brennkraftmaschine zu schaffen, die ein kompaktes Gesamtkonzept mit einer einfachen und sicheren Schmiermittelversorgung bieten.

Die der Erfindung zugrunde liegende Aufgabe wird durch ein Modul gelöst, welches die Merkmale, des Anspruchs 1 aufweist. Es ist somit ein Modul vorgesehen, dessen Grundkörper zumindest bereichsweise in ein Ölbad einer Ölwanne der Brennkraftmaschine eintauchbar ist. Dabei ist an dem Grundkörper wenigstens eine Abdeckung angeordnet, die sich zumindest über die Antriebsräder erstreckt. Die Antriebsräder befinden sich somit in einem Raum zwischen dem Grundkörper des Moduls und der an dem Grundkörper angeordneten Abdeckung. Die Abdeckung dient somit dazu, die Antriebsräder von dem Ölbad zu trennen, sodass durch die Rotation der Antriebsräder das in der Ölwanne befindliche Öl/Ölbad nicht verschäumt wird. Weiterhin weist die Abdeckung eine Ölstandsausgleichsöffnung auf, die durch das Eintauchen des Grundkörpers in dem Ölbad anordenbar ist. Die Ölstandsausgleichsöffnung befindet sich somit im montierten Zustand des Moduls an einer Brennkraftmaschine unterhalb eines Ölspiegels des Ölbads. Wie der Name schon sagt, dient die Ölstandsausgleichsöffnung zum Ausgleich von Ölständen, nämlich des Ölstands in der Ölwanne und des Ölstands in dem Raum zwischen der Abdeckung und dem Grundkörper, in welchem insbesondere die Antriebsräder angeordnet sind. Finden keine Rotationsbewegungen der Antriebsräder statt, also bei Stillstand einer das Modul aufweisenden Brennkraftmaschine, können sich die Ölstände in der Ölwanne und in dem genannten Raum ausgleichen, wobei in Abhängigkeit von der Größe der Durchströmungsfläche der Ölstandsausgleichsöffnung der Ausgleich schneller oder langsamer stattfindet. Im Betrieb, also wenn die Antriebsräder mittels einer rotierenden Kurbelwelle einer Brennkraftmaschine angetrieben werden, sorgen die Antriebsräder und insbesondere das Öl mitnehmende Endloszugmittel dafür, dass sich der Ölpegel in dem Raum verringert. Während die Antriebsräder das Schmiermittel unter anderem verschleudern, zieht das Endloszugmittel das an ihm haftende Schmiermittel aus dem Raum heraus und zumindest bis zu dem Abtriebsrad der Kurbelwelle. Während also die Antriebsräder und auch das Antriebsrad mit Schmiermittel versorgt werden, wird ein Verschäumen des Ölbads verhindert. Nach Anlauf der Brennkraftmaschine verringert sich der Ölpegel in dem Raum und Öl strömt aus dem Ölbad durch die Ölstandsausgleichsöffnung nach.

Vorteilhafterweise weist die Abdeckung wenigstens eine Öffnung für das Endloszugmittel auf. Die Öffnung befindet sich zweckmäßigerweise oberhalb des Ölbads und ist in Richtung der Kolbenachse geöffnet ausgerichtet. Ist nur eine Öffnung für das Endloszugmittel vorgesehen, so ist es vorteilhaft, wenn der in das Modul führende Abschnitt und der aus dem Modul herausführende Abschnitt des Endloszugmittels dicht beieinander liegen, sodass die Öffnung klein gehalten werden kann. Schließt sich an die Abdeckung des an einer Brennkraftmaschine montierten Moduls jedoch eine Abdeckung der Brennkraftmaschine an, ist die Größe der Öffnung eher vernachlässigbar. Alternativ sind zwei Öffnungen vorgesehen, wobei durch jeweils eine Öffnung ein Abschnitt des Endloszugmittels geführt wird beziehungsweise führbar ist.

Bevorzugt ist die Abdeckung an dem Grundkörper lösbar befestigt, sodass eine einfache Montage des Moduls an einer Brennkraftmaschine gewährleistet wird. Zum Aufziehen des Endloszugmittels kann somit die Abdeckung entfernt werden, wodurch ein aufwendiges und zeitintensives Einfädeln des Kettenzugs oder ein nachträgliches Montieren der Zahnräder entfällt. Alternativ ist die Abdeckung einstückig mit dem Grundkörper ausgebildet, wodurch ein besonders kompaktes und belastbares Modul geboten wird. Je nach Umschlingungswinkel beziehungsweise Umschlingungsrichtung wird hierbei festgelegt, ob sich die Antriebsräder gegenläufig oder gleichläufig miteinander und/oder mit dem Abtriebsrad der Kurbelwelle drehen.

Zweckmäßigerweise ist die Durchströmungsfläche der Ölstandsausgleichsöffnung entsprechend einem Schmiermittelbedarf für die Antriebsräder und das Endloszugmittel gewählt. Sind hohe Drehzahlen und/oder eine hohe Anzahl von Schmierstellen vorgesehen, so wird die Durchströrnungsfläche der Ölstandsausgleichsöffnung entsprechend größer gewählt, sodass in kürzerer Zeit mehr Öl nachfließen/-strömen kann. Bei niedrigeren Drehzahlen und/oder einer verhältnismäßig kleineren Anzahl von Schmierstellen kann die Durchströmungsfläche entsprechend kleiner gewählt werden/sein.

Gemäß einer vorteilhaften Weiterbildung des Moduls ist vorgesehen, dass der Ölstandsausgleichsöffnung beziehungsweise der Durchströmungsfläche ein schaltbares und/oder einstellbares Ventil zugeordnet ist. Mittels des Ventils kann auf einfache Art und Weise im Betrieb die Ölstandsausgleichsöffnung verschlossen, freigegeben und/oder die Größe der Durchströmungsfläche an den Bedarf angepasst, und somit stets eine optimale Schmiermittelzuführung gewährleistet werden. Alternativ und/oder zusätzlich kann eine einstellbare Drossel zum Bestimmen der Durchströmungsfläche vorgesehen sein. Mittels des Ventils kann die Durchströmungsfläche beziehungsweise die Ölstandsausgleichsöffnung bei Bedarf auch ganz verschlossen werden.

Bevorzugt sind die Antriebsräder als Zahnräder und das Endloszugmittel als Kettentrieb ausgebildet. Hierdurch wird die Übertragung großer Momente und Kräfte sowie eine gesicherte, wartungsfreie Endloszugmittel-Lebensdauer gewährleistet.

Weiterhin wird ein Ausführungsbeispiel bevorzugt, bei dem die Ölpumpe integriert in den Grundkörper ausgebildet ist. Hierzu weist der Grundkörper wenigstens eine entsprechende Ausnehmung auf, in welcher Pumpenräder der Ölpumpe drehbar gelagert angeordnet sind, sodass zumindest ein Teil der Ölpumpe von dem Grundkörper selbst gebildet wird. Zweckmäßigerweise ist den Pumpenrädern ein Pumpendeckel zugeordnet. Durch die integrierte Ausbildung der Ölpumpe wird die Handhabbarkeit des Moduls und dessen Montage weiter vereinfacht. Alternativ kann die Ölpumpe als separat ausgebildete Pumpeneinheit an dem Grundkörper des Moduls befestigt sein. Dies hat den Vorteil, dass unterschiedliche Ölpumpen mit unterschiedlichen Fördervolumen auf einfache Art und Weise an dem Modul vorgesehen werden können, sodass das Modul leicht und kostengünstig an kundenspezifische Vorgaben angepasst werden kann.

Gemäß einer vorteilhaften Weiterbildung ist vorgesehen, dass der Grundkörper einen Ölhobel bildet. Das Modul soll somit weitere Funktionen übernehmen, wobei die Funktion des Ölhobels im Wesentlichen darin zu sehen ist, von einem Kurbelgehäuse einer Brennkraftmaschine heruntertropfendes Öl aufzufangen und dem Ölbad zuzuführen. Gegebenenfalls kann der Ölhobel sich an rotierenden Elementen einer das Modul aufweisenden Brennkraftmaschine befindliches Öl abstreifen, um es dem Ölbad zur Wiederverwertung zuzuführen.

Weiterhin ist vorgesehen, dass der Grundkörper zusätzlich oder alternativ eine Stützstruktur für die Brennkraftmaschine bildet. Dazu ist der Grundkörper zweckmäßigerweise derart gestaltet, dass er das Kurbelgehäuse der Brennkraftmaschine versteifend unterstützt. Dazu weist der Grundkörper vorteilhafterweise eine oder mehrere Versteifungsrippen auf und ist zweckmäßigerweise im Bereich von Schottwänden des Kurbelgehäuses, insbesondere direkt an den Schottwänden des Kurbelgehäuses befestigbar. Hierdurch können aufwendige Verrippungen, die an der Brennkraftmaschine selbst ausgebildet sind, vermieden oder auf ein Minimum beschränkt werden. Dadurch werden Material- und Kosteneinsparungen an einer Brennkraftmaschine realisiert. Darüber hinaus kann auch der vertikale Bauraumbedarf einer Brennkraftmaschine durch Vorsehen des Moduls verringert werden.

Vorteilhafterweise weist der Grundkörper des Moduls der Ölpumpe zugeordnete Ölkanäle auf. Bei diesen Ölkanälen handelt es sich bevorzugt um zumindest einen Druckkanal und einen Saugkanal, die von der Ölpumpe weg beziehungsweise zu der Ölpumpe hinführen. Besonders bevorzugt münden die Ölkanäle an der einer Brennkraftmaschine zugeordneten Seite des Grundkörpers in ein Anschlusselement, das bei der Montage des Moduls an einer Brennkraftmaschine ein automatisches Verbinden des Ölkanals mit einem entsprechenden Ölkanal der Brennkraftmaschine ermöglicht. Die Ölkanäle können dabei als Bohrungen oder auch als mit einem weiteren Bauteil, insbesondere mit Bereichen des Kurbelgehäuses der Brennkraftmaschine, zusammenwirkende Aussparungen ausgebildet sein. Darüber hinaus ist es denkbar, zumindest einem der Ölkanäle, insbesondere dem Ölsaugkanal, einen Ölfilter beziehungsweise ein Ansaugsieb zuzuordnen. Der Ölfilter kann in den Grundkörper integriert sein oder als separates Bauteil zweckmäßigerweise mit einem Presssitz in dem Grundkörper gehalten sein.

Schließlich ist vorgesehen, dass an dem Grundkörper des Moduls wenigstens ein Aktor zur Regelung/Steuerung der Ölpumpe angeordnet ist. Besonders bevorzugt ist der Aktor als seibstregelnder Aktor ausgebildet, der beispielsweise in Abhängigkeit von einer Temperatur, einer Drehzahl und/oder einer Last der Brennkraftmaschine das Fördervolumen der Ölpumpe regelt. Alternativ ist es denkbar, an dem Modul lediglich eine Ölsteuerleitung vorzusehen, die mit einem beispielsweise an der Brennkraftmaschine angeordneten Aktor zusammenwirkt. In diesem Fall wird die Ölpumpe über einen Regelöldruck, der von dem externen Aktor bereitgestellt wird, geregelt beziehungsweise geschaltet.

Die erfindungsgemäße Brennkraftmaschine zeichnet sich dadurch aus, dass an ihrem Kurbelgehäuse ein Modul wie es obenstehend beschrieben wurde, derart befestigt ist, dass das eine Abtriebsrad der Brennkraftmaschine in der gemeinsamen Ebene der Antriebsräder des Moduls liegt, und dass der Grundkörper wenigstens mit der Ölstandsausgleichsöffnung in ein Ölbad einer Ölwanne der Brennkraftmaschine eingetaucht angeordnet ist. Bevorzugt umschlingt das Endloszugmittel das Abtriebsrad und die beiden Antriebsräder, sodass mittels der Rotation der Kurbelwelle die Ausgleichswelle und die Ölpumpe über das Endloszugmittel angetrieben werden. Hier findet also ein Antrieb von Ausgleichswelle und Ölpumpe in einer. Ebene statt. Dadurch, dass der Grundkörper derart in das Ölbad der Ölwanne eingetaucht angeordnet ist, dass sich die Ölstandsausgleichsöffnung in dem Ölbad, also unterhalb eines Ölspiegels in der Ölwanne befindet, wird gewährleistet, dass durch die Ölstandsausgleichsöffnung im Betrieb ein Nachströmen von Öl in den Raum zwischen Abdeckung und Grundkörper zur Schmierung der Antriebseinheit, bestehend aus Antriebsrädern, Abtriebsrad und Endloszugmittel - wie oben beschrieben -, gewährleistet ist. Die Abdeckung kann aus Kunststoff, insbesondere im Spritzgussverfahren, oder aus Stahl, durch Umformung, gebildet werden. Durch die Wahl der Größe der Durchströmungsfläche der Ölstaneisausgleichsöffnung wird eine kontrollierte Schmierung der Antriebselemente des Moduls und der Brennkraftmaschine auf der die gemeinsame Ebene aufweisenden Seite gewährleistet.

Gemäß einem vorteilhaften Ausführungsbeispiel ist vorgesehen, dass die Kurbelwelle ein weiteres Abtriebsrad aufweist, das in einer weiteren Ebene gemeinsam mit einem Antriebsrad wenigstens einer Nockenwelle der Brennkraftmaschine liegt. Das bedeutet letztendlich, dass der Antrieb der Nockenwelle in einer anderen Ebene liegt, als der Antrieb für die Ölpumpe und die Ausgleichswelle. Der Gaswechsel der Brennkraftmaschine wird somit in einer zweiten Antriebsebene vollzogen.

In einem bevorzugten Ausführungsbeispiel jedoch liegt das wenigstens eine Antriebsrad der Nockenwelle in der gemeinsamen Ebene mit den Antriebsrädern der Ölpumpe und der Ausgleichswelle, sodass das Endloszugmittel von dem Antriebsrad angetrieben die Antriebsräder der Ausgleichswelle, der Ölpumpe und der Nockenwelle antreibt. Das Endloszugmittel und die Antriebsräder und das eine Abtriebsrad der Kurbelwelle sind zweckmäßigerweise als Kettenräder ausgebildet, um die Übertragung hoher Kräfte und Momente zu gewährleisten. In diesem beschriebenen Ausführungsbeispiel ist also nur ein einziges Endloszugmittel, beziehungsweise ein einziger Kettentrieb vorgesehen, der sowohl Nebenaggregate (Ölpumpe, Ausgleichswelle) als auch die Nockenvirelle antreibt. Die vorteilhafte Ausbildung des Moduls ermöglicht es hierbei, dass in den Raum zwischen Abdeckung und Grundkörper gelangtes Öl von dem Endloszugmittel bis zu der Nockenwelle gezogen und dort zur Schmierung genutzt werden kann, während eine Ölverschäumung durch die Rotation der unterhalb des Ölspielgels befindlichen Antriebsräder durch die vorteilhafte Abdeckung mit Ölstandsausgleichsöffnung vermieden wird. Hierdurch wird eine besonders einfache und kostengünstige Schmierung sämtlicher Antriebselemente auf der Frontseite der Brennkraftmaschine bei besonders kompakter Bauweise gewährleistet.

Im Folgenden soll die Erfindung anhand der Zeichnung näher erläutert werden. Es zeigen:
- Figur 1: eine vereinfacht dargestellte Brennkraftmaschine mit einem Modul zum Ausgleich von Massenkräften und/oder Momenten,
- Figur 2: eine Abdeckung des Moduls in einer perspektivischen Darstellung,
- Figur 3: einen Grundkörper des Moduls in einer perspektivischen Unteransicht,
- Figur 4: eine weitere Ausführungsform des Moduls in einer perspektivischen Draufsicht,
- Figur 5: die weitere Ausführuhgsform des Moduls in einer perspektivischen Unteransicht und
- Figur 6: eine weitere Ausführungsform der Brennkraftmaschine in einer vereinfachten Darstellung.

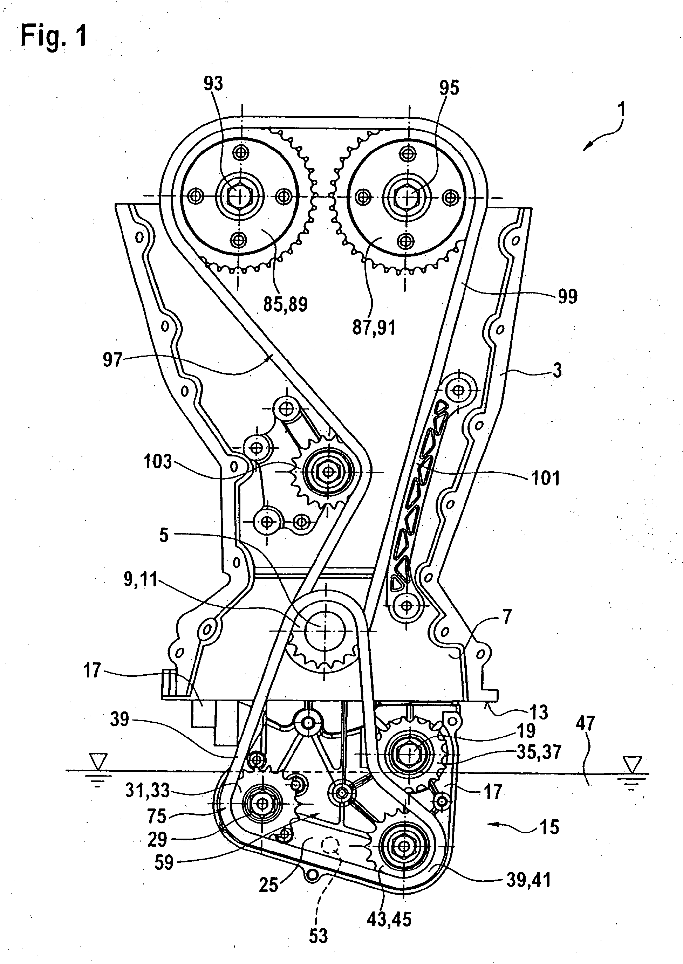

Figur 1 zeigt in einer vereinfachten Darstellung eine Brennkraftmaschine 1 in einer Ansicht auf ihre Vorder- beziehungsweise Frontseite. Die Brennkraftmaschine 1 umfasst ein Kurbelgehäuse 3, in welchem mehrere Hubkolben zum Antreiben einer Kurbelwelle 5 beweglich gelagert und über Pleuelverbindungen mit der Kurbelwelle 5 verbunden sind. Die Kurbelwelle. 5 ist dabei im unteren Bereich des Kurbelgehäuses 3 gelagert, wobei ein freies Ende der Kurbelwelle 5 durch eine Stirnwand 7 des Kurbelgehäuses 3 aus dem Kurbelgehäuse 3 herausragt. An ihrem freien Ende weist die Kurbelwelle 5 ein Abtriebsrad 9 auf, das als Zahnrad beziehungsweise Kettenrad 11 ausgebildet ist. Das Abtriebsrad 9 ist drehfest mit der Kurbelwelle 5 verbunden.

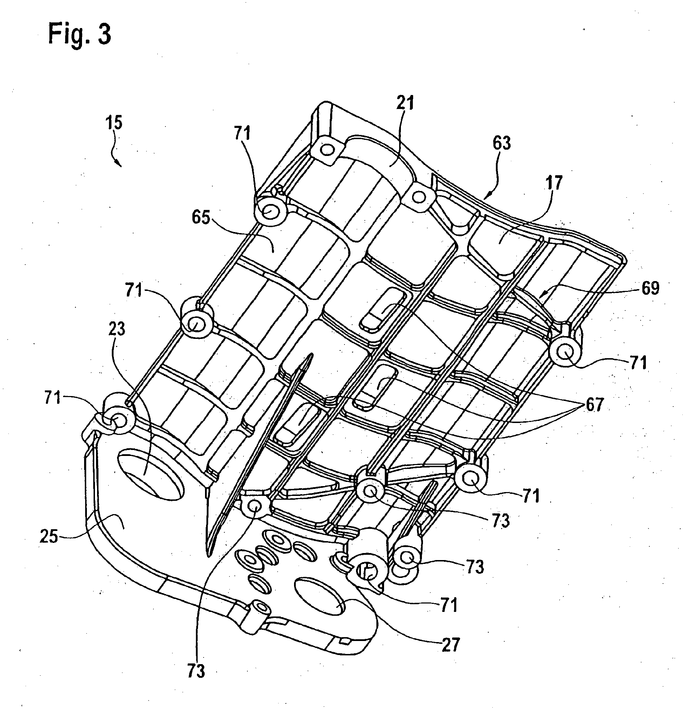

An der Unterseite 13 des Kurbelgehäuses 3 ist ein Modul 15 zum Ausgleich von Massenkräften und/oder Momenten der Brennkraftmaschine 1 befestigt. Das Modul 15 weist einen Grundkörper 17 auf, wie er beispielhaft in Figur 3 in einer perspektivischen Unteransicht dargestellt ist. Der Grundkörper 17 erstreckt sich im Wesentlichen über die gesamte Länger der Brennkraftmaschine 1. An dem Grundkörper 17 des Moduls 15 ist zweckmäßigerweise eine Ausgleichswelle 19 drehbar gelagert angeordnet. Dazu weist der Grundkörper 17 wenigstens zwei Gleitlager 21, 23 auf, wie in Figur 3 dargestellt. Bevorzugt sind anstelle der Gleitlager 21, 23 Wälzkörperlager vorgesehen. Diese verursachen, insbesondere beim Anlauf eine in Bezug auf Gleitlager deutlich verringerte Reibung, so dass die Leistungsaufnahme beim Anlauf um etwa den Faktor 10 fällt. Während das Gleitlager 23 einstückig ist, ist das Gleitlager 21 zweckmäßigerweise zumindest zweiteilig ausgebildet, um die Ausgleichswelle 19 montieren zu können. Zum Ausgleichen von Massenkräften und/oder Momenten der Brennkraftmaschine 1 weist die Ausgleichswelle 19 wenigstens eine Unwucht auf, die ein axiales Durchschieben durch ein Gleitlager verhindern würde. Das Gleitlager 23 ist dabei in einer Stirnwand 25 des Grundkörpers 17 ausgebildet, die im Wesentlichen senkrecht zu dem übrigen Grundkörper 17 ausgerichtet ist.

Die Stirnwand 25 weist weiterhin beabstandet zu dem Gleitlager 23 eine Öffnung 27 auf, durch welche sich, wie in Figur 1 dargestellt, die Antriebswelle 29 einer in Figur 3 nicht näher dargestellten Ölpumpe erstreckt. Das sich über die Stirnwand 25 hinaus erstreckende freie Ende der Antriebswelle 29 weist dabei ein Antriebsrad 31 auf, das drehfest mit der Antriebswelle 29 verbunden und als Zahnrad beziehungsweise Kettenrad 33 ausgebildet ist. Auf dem sich über die Stirnwand 25 hinaus erstreckenden freien Ende der Ausgleichswelle 19 ist ebenfalls ein Antriebsrad 35 drehfest angeordnet und als Zahnrad beziehungsweise Kettenrad 37 ausgebildet. Die Antriebsräder 35 und 31 liegen dabei in einer gemeinsamen (gedachten) Ebene.

Weiterhin ist das Modul 15 beziehungsweise der Grundkörper 17 derart an der Brennkraftmaschine 1 beziehungsweise an deren Kurbelgehäuse 3 angeordnet befestigt, dass sich auch das der Kurbelwelle 5 zugeordnete Abtriebsrad 9 in der gemeinsamen Ebene der Antriebsräder 31 und 35 befindet, sodass das Abtriebsrad 9 und die Antriebsräder 35 und 37 von einem Endloszugmittel 39, das vorliegend als Kettentrieb 41 ausgebildet ist, umschlungen werden können. Wie aus Figur 1 ersichtlich, sind die Antriebsräder 31 und 33 derart von dem Kettentrieb 41 umschlungen, dass sich das Antriebsrad 31 der Ölpumpe in die gleiche Richtung dreht wie das Abtriebsrad 9, während das Antriebsrad 35 entgegengesetzt zu der Drehrichtung des Abtriebsrads 9 beziehungsweise der Kurbelwelle 5 gedreht wird. Hierdurch wird die Ausgleichswelle 19 in eine der Kurbelwellenbewegung entgegengesetzte Rotation versetzt, wodurch die Massenkräfte und/oder Momente der Brennkraftmaschine 1 besonders günstig ausgeglichen beziehungsweise kompensiert werden können. Um ein derartiges Umschlingen zu ermöglichen, ist ferner an der Stirnwand 25 ein Umlenkrad 43 drehbar gelagert, das als Zahnrad beziehungsweise Kettenrad 45 ausgebildet und in der oben beschriebenen gemeinsamen Ebene angeordnet ist. In einem bevorzugten, hier nicht näher dargestellten Ausführungsbeispiel, ist das Umlenkrad 43 radial vorgespannt gelagert, um das Endloszugmittel 39 vorzuspannen, sodass stets ein Anliegen des Endloszugmittels an den Antriebsrädern 31, 35 beziehungsweise an dem Abtriebsrad 9 gewährleistet ist und ungünstige Schwingungen des Endloszugmittels 39 unterbunden werden.

Wie aus Figur 1 weiter ersichtlich, ist der Grundkörper 17 des Moduls 15 bereichsweise in ein Ölbad 47 einer hier nicht näher dargestellten Ölwanne der Brennkraftmaschine 1 eingetaucht angeordnet, sodass zumindest die Kettenräder 33 und 45 bereichsweise unterhalb des Ölspiegels des Ölbads 47 liegen. Um ein Verschäumen des Öls des Ölbads 47 im Betrieb durch insbesondere die Rotation der Kettenräder 33 und 45 zu verhindern, ist eine Abdeckung 49 vorgesehen, die an der Stirnwand 25 befestigbar ist.

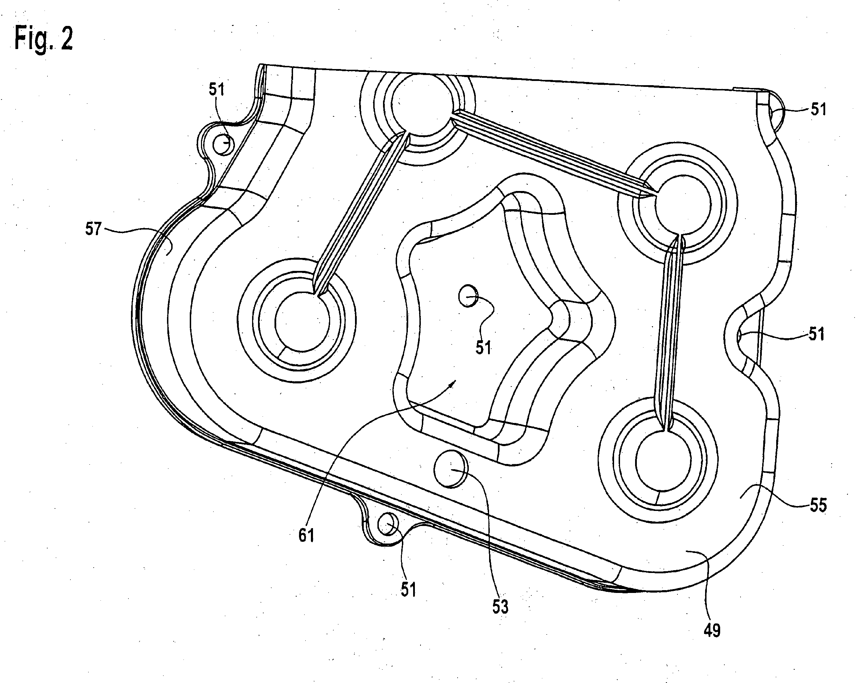

Figur 2 zeigt in einer perspektivischen Darstellung eine Draufsicht auf die Abdeckung 49, die aus Kunststoff oder Stahl gebildet sein kann. Die Kontur der Abdeckung 49 entspricht zweckmäßigerweise der Kontur der Stirnwand 25 des Grundkörpers 17 beziehungsweise des Moduls 15, sodass sich die Abdeckung 49 in an die Stirnwand 25 montierten Zustand über die gesamte Stirnwand 25, und damit über die Kettenräder 37, 33 und 45 erstreckt. In dem vorliegenden Ausführungsbeispiel weist die Abdeckung 49 zum Befestigen mehrere Durchtrittsöffnungen 51 auf, durch welche Schrauben geführt und in ein Gewinde des Grundkörpers 17 eingeschraubt werden können. Alternativ oder zusätzlich ist es denkbar, die Abdeckung 49 an dem Grundkörper 17 mittels Klebemittel oder Verschweißen zu befestigen. Ebenso ist es denkbar, Rastmittel an der Abdeckung 49 und/oder an dem Gründkörper 17 beziehungsweise an der Stirnwand 25 vorzusehen, die ein verrastendes Aufeinanderstecken der Abdeckung 49 an den Grundkörper 17 erlaubt.

An ihrer zu der Brennkraftmaschine 1 weisenden Oberseite ist die Abdeckung 49 randoffen ausgebildet, sodass das Endloszugmittel 39 beziehungsweise der Kettentrieb 41 von dem Modul 15 zu der Brennkraftmaschine 1 geführt werden kann.

Während in dem vorliegenden Ausführungsbeispiel sich die Abdeckung 49 lediglich über die Stirnwand 25 des Grundkörpers 17 erstreckt, ist es in einem weiteren hier nicht dargestellten Ausführungsbeispiel denkbar, dass sich die Abdeckung 49 weiter zumindest bereichsweise über die Stirnseite 7 des Kurbelgehäuses 3 beziehungsweise der Brennkraftmaschine 1 erstreckt.

Im unteren Bereich der Abdeckung 49 ist weiterhin eine Ölstandsausgleichsöffnung 53 vorgesehen, die vorliegend als Bohrung ausgebildet ist. Während vorliegend die Ölstandsausgleichsöffnung 53 in einer Stirnfläche 55 der Abdeckung 49 vorgesehen is1t, ist es ebenso denkbar, die Ölstandsausgleichsöffnung 53 in einer Seitenbeziehungsweise Randfläche 57 vorzusehen. Ebenso ist es denkbar, mehrere Ölstandsausgleidhsöffnungen 53 vorzusehen, die an unterschiedlichen Stellen der Abdeckung 49 ausgebildet sind.

Vorliegend ist die Position der Ölstandsausgleichsöffnung 53 derart gewählt, dass sie im montierten Zustand des Moduls 15 in dem Ölbad 47, also unterhalb des Ölspiegels des Ölbads 47 liegt. In Figur 1 ist die Ölstandsausgleichsöffnung 53 beziehungsweise deren Position zur Verdeutlichung des Sachverhalts gestrichelt dargestellt. Wie der Name schon sagt, ermöglicht die Ölstandsausgleichsöffnung 53 einen Ölstandsausgleich zwischen dem Ölbad 47 und dem in dem zwischen der Abdeckung 49 und der Stirnwand 25 gebildeten Raum 59 befindlichen Ölvolumen. Im Ruhezustand der Brennkraftmaschine 1 gleichen sich die Ölstände in dem Ölbad und in dem Raum 59 aus.

Im Betrieb, wenn also die Kurbelwelle 5 in Rotation versetzt wird, und dadurch mittels des Kettentriebs 41 die Antriebsräder 35 und 31 der Ölpumpe beziehungsweise der Ausgleichswelle angetrieben werden, zieht der Kettentrieb 41 das in dem Raum 59, befindliche Öl mit und fördert es zumindest bis zu dem Abtriebsrad 9 der Kurbelwelle 5. Somit ist ein selbstschmierendes System gegeben, bei dem auf aufwendige Schmiermittelführungssysteme verzichtet werden kann. Gleichzeitig wird durch die Abdeckung 49 ein Verschäumen des Ölbads 49 wirksam verhindert.

Die Größe der Durchtrittsfläche beziehungsweise der Durchströmfläche der Ölstandsausgleichsöffnung 53 ist zweckmäßigerweise derart gewählt, dass im Betrieb der Brennkraftmaschine 1 genügend Öl aus dem Ölbad in den Raum 59 zur ausreichenden Schmierung der genannten Antriebselemente nachströmen kann.

Um ein bei Inbetriebnahme der Brennkraftmaschine 1 erfolgendes Verschäumen des in dem Raum 59 befindlichen Öls weitestgehend zu vermeiden beziehungsweise vernachlässigbar klein zu halten, weist die Abdeckung 49 zumindest einen wannenförmigen Bereich 61 auf, der in den Raum 59 ragt, wodurch das Volumen des Raums 59 verkleinert wird.

Das in Figur 3 dargestellte Modul 15 zeichnet sich weiter dadurch aus, dass der Grundkörper 17 einen sogenannten Ölhobel 63 bildet. Der Ölhobel 63 dient dazu, das vom Kurbelgehäuse 3 und von den sich darin bewegenden Komponenten ablaufende Öl zu sammeln und in die Ölwanne zu führen. Dazu weist der Ölhobel 63 beziehungsweise Grundkörper 17 eine sich über die Länge der Brennkraftmaschine 1 beziehungsweise des Kurbelgehäuses 3 erstreckende Sammelplatte 65 auf, in der mehrere Ölablauföffnungen 67 ausgebildet sind. Auf diesem Weg wird das von dem Kurbelgehäuse 3 beziehungsweise der Brennkraftmaschine 1 kommende Öl beruhigt und über die Ölablauföffnungen 67 der Ölwanne zugeführt. Dadurch wird gewährleistet, dass kein verschäumtes Öl in die Ölwanne gerät. Darüber hinaus verhindert der Ölhobel 63 bei extremen Belastungen eines die Brennkraftmaschine 1 aufweisenden Fahrzeugs, wie beispielsweise bei engen und schneller Kurven/Berg-/Talfahrten, ein Eintauchen der rotierenden Komponenten der Brennkraftmaschine 1, beispielsweise Kurbelwelle/Pleuelunterseite, in das Ölbad, wodurch ein Sauerstoffeinschluss in dem Ölbad verhindert wird, der zur Zerstörung der Brennkraftmaschine 1 führen könnte. Durch die Ausbildung des Grundkörpers 17 als Ölhobel 63 entfällt ein sonst separat vorgesehener Ölhobel sowie die dafür not-wendigen Befestigungsmittel, wie beispielsweise in das Kurbelgehäuse eingearbeitete Gewindebohrungen. Hierdurch werden die Kosten gesenkt und die Montage der Brennkraftmaschine 1 gestaltet sich einfacher. Außerdem verringert sich der vertikale Bauraumbedarf, da durch die integrierte Ausbildung des Ölhöbels 63 in dem Modul 15 insgesamt weniger Bauteile vorgesehen sind.

Weiterhin ist vorgesehen, dass der Grundkörper 17 des Moduls 15 eine Stützstruktur 69 für die Brennkraftmaschine 1 beziehungsweise für das Kurbelgehäuse 3 bildet. Die Stützstruktur 69 zeichnet sich durch Versteifungsrippen aus, die sich über die dem Kurbelgehäuse 3 abgewandten Seite des Grundkörpers 17 erstrecken. Weiterhin weist die Stützstruktur 69 Durchtrittsöffnungen 71 zum Durchführen von Schrauben zur Befestigung am Kurbelgehäuse 3 auf, die derart angeordnet sind, dass der Grundkörper 17 im Bereich der Schottwände beziehungsweise direkt an den Schottwänden der einzelnen beziehungsweise zwischen den einzelnen Zylindern des Kurbelgehäuses 3 befestigt werden kann beziehungsweise ist. Dadurch trägt das Modul 15 einen wesentlichen Beitrag zum Versteifen des Kurbelgehäuses 3 bei, im Besonderen bei sogenannten Deep-Skirt-Zylinderblöcken. Diese neigen unter Voll-/Teillastbetrieb zum Klaffen quer zur Achsrichtung der Kurbelwelle 5. Durch Vorsehen der Stützstruktur 69 an dem Grundkörper 17 können aufwendige Verrippungen, die der Struktursteifigkeit des Kurbelgehäuses 3 dienen und dem Klaffen entgegenwirken, an dem Kurbelgehäuse 3 selbst auf ein Minimum beschränkt oder ganz weggelassen werden. Hierdurch werden Material- und Kosteneinsparungen am Motor geboten. Darüber hinaus lässt sich die Stützstruktur 69 an dem Grundkörper 17 einfacher herstellen als an dem Kurbelgehäuse 3 selbst. Auch hierdurch wird der Bauraumbedarf der Brennkraftmaschine 1 weiter verringert.

Gemäß dem Ausführungsbeispiel der Figur 3 ist vorgesehen, dass die Ölpumpe als separates Bauteil an der Unterseite der Sammelplatte 65 befestigt werden kann. Hierzu sind entsprechende Gewindebohrungen 73 in der Nähe der Öffnung 27 angeordnet. Der Vorteil hierbei liegt darin, dass auf einfache Art und Weise unterschiedliche Ölpumpen vorgesehen werden können, die an den Bedarf der Brennkraftmaschine 1 angepasst sind. Insofern wird das Modul 15 selbst modular ausgebildet. Einzige Voraussetzung ist, dass die vorgesehenen Ölpumpen an den entsprechenden Stellen Möglichkeiten zur Befestigung beziehungsweise Durchtrittsöffnungen für in die Gewindebohrungen 73 einschraubbare Schrauben aufweist.

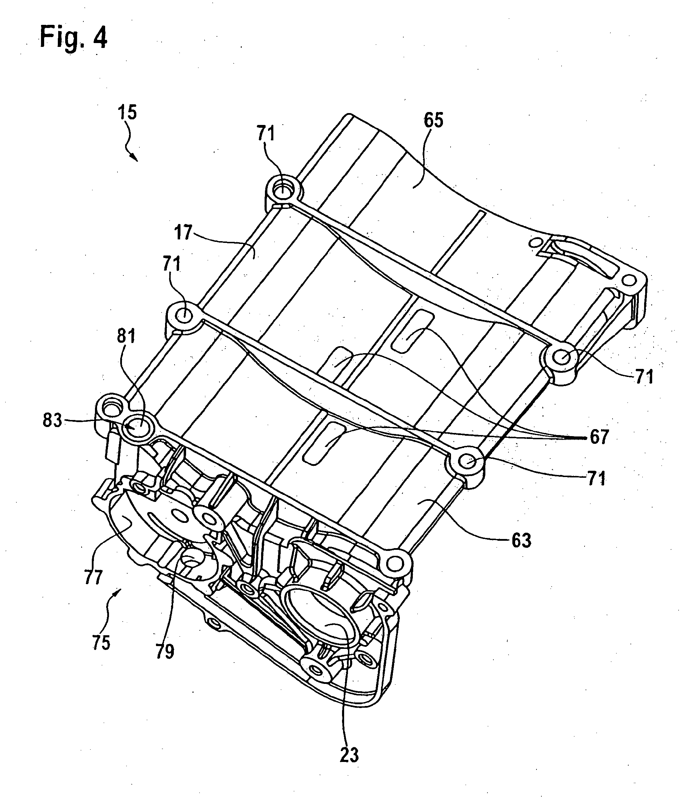

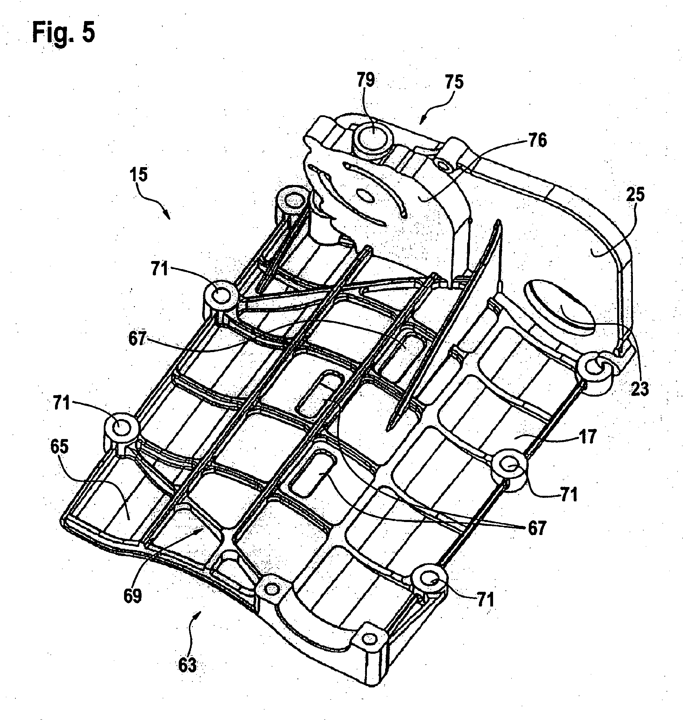

Figuren 4 und 5 zeigen eine Alternative zu der separat vorgesehen Ölpumpe. Figuren 4 und 5 zeigen den Grundkörper 17 des Moduls 15, wobei gleiche Elemente mit denselben Bezugszeichen versehen sind, sodass insofern auf die obenstehende Beschreibung verwiesen wird. Im Unterschied zu dem vorhergehenden Ausführungsbeispiel ist gemäß dem Ausführungsbeispiel der Figuren 4 und 5 vorgesehen, dass eine Ölpumpe 75 in den Grundkörper 17 integriert ausgebildet ist. Dazu weist der Grundkörper 17 an seiner Stirnwand 25 eine Aufnahme 77 für zumindest ein Pumpenrad auf. In die Aufnahme 77 münden bevorzugt ein Saugkanal 79, dessen anderes Ende der Ölwanne zugeordnet ist, und ein Druckkanal 81, der an seinem der Brennkraftmaschine zuweisenden Ende 83 zur Aufnahme eines Anschlusszapfens eines Druckkanals des Kurbelgehäuses 3 ausgebildet ist, sodass beim Befestigen des Moduls 15 beziehungsweise des Grundkörpers 17 an dem Kurbelgehäuse 3 automatisch eine fluid-technische Verbindung zwischen der Ölpumpe 75 und den Öl-kanälen des Kurbelgehäuses 3 beziehungsweise der Brennkraftmaschine 1 hergestellt wird. Bei Verwendung einer Flügelzellenpumpe laufen Rotor und Flügel der Ölpumpe 75 bevorzugt auf der Stirnwand 25 des Grundkörpers 17. Somit wird eine axiale Fläche der Ölpumpe. 75 durch den Grundkörper 17 gebildet. Hierzu ist an der Innenseite der Stirnwand 25 eine erhöhte Pumpenflanschfläche 76 vorgesehen, an welcher ein Pumpengehäuse angeflanscht werden kann. Der wesentliche Teil der Ölpumpe 75 kann dabei auf der Innenseite oder auf der Außenseite, wie in Figur 3 dargestellt, liegen. Durch die integrierte Ausbildung der Ölpumpe 75 können die Herstellungskosten weiter gesenkt und die Montage weiter vereinfacht werden. Darüber hinaus wird das Ölverdrängungsvolumen in der Ölwanne minimiert.

Druckkanal 81 und Saugkanal 79 können natürlich auch in anderen Richtungen verlaufen und durch unterschiedliche Verfahren hergestellt werden. So ist es denkbar, Druckkanal 81 und/oder Saugkanal 79 bereits beim Urformen, durch beispielsweise Gießen, mittels entsprechenden Kernen oder Schiebern zu erzeugen. Alternativ oder zusätzlich können Druckkanal 81 und/oder Saugkanal 79 auch mittels Bohrungen erzeugt werden. Weist einer der Kanäle (Druckkanal 81, Saugkanal 79) einen von einer Geraden abweichenden Verlauf auf, so kann dieser Kanal beispielsweise auch durch zwei sich schneidende Bohrungen erzeugt werden, von denen eine abschließend mit einem Stopfen verschlossen wird.

In einem weiteren Ausführungsbeispiel kann ein Ansaugsieb in den Grundkörper 17 integriert sein, oder über ein separates Bauteil, zum Beispiel aus Kunststoff, und einem Presssitz in der den Saugkanal bildenden Bohrung gehalten sein.

Gemäß einem weiteren hier nicht dargestellten Ausführungsbeispiel kann ein Aktor, der zur Regelung/Schaltung der Ölpumpe dient, in das Modul 17 integriert sein. Es kann beispielsweise dazu ein Temperaturelement, ein Bi-Metall-Schaltventil oder ein elektrisches Schaltventil an dem Grundkörper 17 angeordnet sein. Der Aktor regelt/schaltet das Fördervolumen der Ölpumpe in Abhängigkeit von Parametern wie der Temperatur, einer Motordrehzahl und/oder einer Motorlast. Durch eine separate Ausführung des Aktors, der wie die Ölpumpe lediglich an einem Grundkörper 17 befestigbar ist, lässt sich eine einfache Austauschbarkeit des Aktors gewährleisten, wodurch die Montage und die Wartung vereinfacht werden.

Alternativ kann der Aktor anstatt im Modul 15 auch im Kurbelgehäuse 13 untergebracht sein. In diesem Fall wird die Ölpumpe 75 über einen Regelöldruck, der von dem Aktor zurück an die Ölpumpe 75 geführt werden muss, geregelt beziehungsweise geschaltet.

Die Brennkraftmaschine 1 gemäß Figur 1 weist eine weitere Antriebsebene auf, in welcher ein hinter dem Abtriebsrad 9 liegendes weiteres Abtriebsrad sowie Antriebsräder 85 und 87, die als Kettenräder 89, 91 ausgebildet und drehfest mit jeweils einer Nockenwelle 93, 95 verbunden sind, liegen. Die Antriebsräder 85 und 87 sowie das weitere Abtriebsrad werden von einem zweiten Endloszugmittel 97 umschlungen. Um einen sicheren Betrieb zu gewährleisten sowie Schwingungen im Endloszugmittel 97, das bevorzugt als Kettentrieb 99 ausgebildet ist, zu vermeiden, sind vorteilhafterweise eine Spannschiene 101 sowie eine Umlenkrolle 103 vorgesehen.

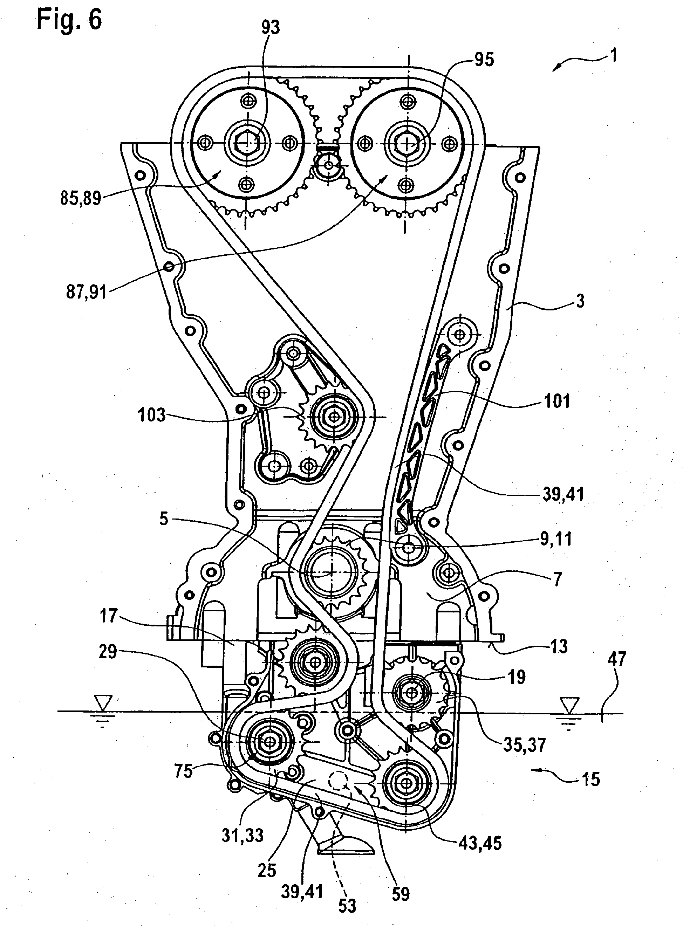

Gemäß einer bevorzugten Ausführungsform, wie sie in Figur 6 dargestellt ist, weist die Brennkraftmaschine 1 lediglich eine Antriebsebene auf. Die in Figur 6 dargestellte Brennkraftmaschine 1 entspricht im Wesentlichen der in Figur 1 dargestellten Brennkraftmaschine 1, sodass gleiche Elemente mit denselben Bezugszeichen versehen sind, und insofern auf die obenstehende Beschreibung verwiesen wird.

Gemäß Figur 6 wird das Endloszugmittel 39 beziehungsweise der Kettentrieb 41 über sämtliche Antriebsräder 31, 35, 85, 87 sowie über die Umlenkräder 43 und 103 sowie das Spannelement 101 und schließlich über das Abtriebsrad 9 der Kurbelwelle 5 geführt. Somit werden sämtliche Komponenten der Brennkraftmaschine 1 von dem einzigen Endloszugmittel 39 bedient.

Durch die vorteilhafte Ausbildung des Moduls 15 mit der Abdeckung 49 und der darin ausgebildeten Ölstandsausgleichsöffnung 53 wird auch eine Schmierung der Antriebsräder 85, 87 der Nockenwellen 93, 95 gewährleistet. Das Endloszugmittel 39 transportiert das in dem Raum 59 befindliche Öl bis zu den Nockenwellen 93, 95, sodass auch hier an den Antriebsräder 85, 87 keine separaten Schmiermittelsysteme vorgesehen werden müssen. Ein weiterer Vorteil liegt darin, dass durch das Vorsehen nur einer (Antriebs-) Ebene beziehungsweise nur eines Endloszugmittels 39 die Brennkraftmaschine 1, in Achsrichtung der Kurbelwelle gesehen, signifikant verkürzt ausfällt/ausgebildet ist.

Insgesamt bietet die Brennkraftmaschine 1 somit auf einfache und kostengünstige Art und Weise eine wirkungsvolle Schmierung sämtlicher Komponenten an der Frontseite, wobei ein Verschäumen von Öl in der Ölwanne vermieden wird.

### Bezugszeichenliste

- 1: Brennkraftmaschine
- 3: Kurbelgehäuse
- 5: Kurbelwelle
- 7: Stirnseite
- 9: Abtriebsrad
- 11: Kettenrad
- 13: Unterseite
- 15: Modul
- 17: Grundkörper
- 19: Ausgleichswelle
- 21: Gleitlager
- 23: Gleitlager
- 25: Stirnwand
- 27: Öffnung
- 29: Antriebswelle
- 31: Antriebsrad
- 33: Kettenrad
- 35: Antriebsrad
- 37: Kettenrad
- 39: Endloszugmittel
- 41: Kettentrieb
- 43: Umlenkrad
- 45: Kettenrad
- 47: Ölbad
- 49: Abdeckung
- 51: Durchtrittsöffnungen
- 53: Ölstandsausgleichsöffnung
- 55: Stirnfläche
- 57: Randfläche
- 59: Raum
- 61: Bereich (wannenförmig)
- 63: Ölhobel
- 65: Sammelplatte
- 67: Ölablauföffnung
- 69: Stützstruktur
- 71: Durchtrittsöffnung
- 73: Gewindebohrung
- 75: Ölpumpe
- 76: Pumpenflanschfläche
- 77: Aufnahme
- 79: Saugkanal
- 81: Druckkanal
- 83: Ende
- 85: Antriebsrad
- 87: Antriebsrad
- 89: Kettenrad
- 91: Kettenrad
- 93: Nockenwelle
- 95: Nockenwelle
- 97: Endloszugmittel
- 99: Kettentrieb
- 101: Spannschlitten:
- 103: Umlenkrolle

## Patentansprüche

1. Modul (15) zum Ausgleich von Massenkräften und/oder Momenten einer Brennkraftmaschine (1), mit einem Grundkörper (17), der an der Brennkraftmaschine (1) anbringbar ist, und an dem wenigstens eine Ausgleichswelle (19) mit einem ersten Antriebsrad (35) und eine Ölpumpe (75) mit einem zweiten Antriebsrad (31) angeordnet sind, wobei das erste und das zweite Antriebsrad (31, 35) von einem Endloszugmittel (39) antreibbar in einer gemeinsamen Ebene zumindest im Wesentlichen außerhalb des Grundkörpers (17) angeordnet sind, **dadurch gekennzeichnet, dass** an dem zumindest bereichsweise in ein Ölbad (47) einer Ölwanne der Brennkraftmaschine (1) eintauchbaren Grundkörper (17) wenigstens eine sich zumindest über die Antriebsräder (31, 35) erstreckende Abdeckung (49) angeordnet ist, die eine durch das Eintauchen in dem Ölbad (47) anordenbare Ölstandsausgleichsöffnung (53) aufweist, und dass der Ölstandsausgleichsöffnung (53) ein schaltbares und/oder einstellbares Ventil zugeordnet ist.

2. Modul nach Anspruch 1, **dadurch gekennzeichnet, dass** die Abdeckung (49) wenigstens eine Öffnung für das Endloszugmittel (39) aufweist.

3. Modul nach einem der Ansprüche 1 oder 2, **dadurch gekennzeichnet, dass** die Abdeckung (49) lösbar an dem Grundkörper (17) befestigt ist.

4. Modul nach einem der vorhergehenden Ansprüche, **dadurch gekennzeichnet, dass** die Abdeckung (49) einstückig mit dem Gründkörper (17) ausgebildet ist.

5. Modul nach einem der vorhergehenden Ansprüche, **dadurch gekennzeichnet, dass** die Durchströmungsfläche der Ölstandsausgleichsöffnung (53) entsprechend einem Schmiermittelbedarf zumindest für die Antriebsräder (31, 35) und das Endloszugmittel (39) gewählt ist.

6. Modul nach einem der vorhergehenden Ansprüche, **dadurch gekennzeichnet, dass** die Antriebsräder (31, 35) als Kettenräder (33, 37) und das Endloszugmittel (39) als Kettentrieb (41) ausgebildet sind.

7. Modul nach einem der vorhergehenden Ansprüche, **dadurch gekennzeichnet, dass** die Ölpumpe (75) integriert in den Grundkörper (17) ausgebildet oder als separat ausgebildete Pumpeneinheit daran befestigt ist.

8. Modul nach einem der vorhergehenden Ansprüche, **dadurch gekennzeichnet, dass** der Grundkörper (17) einen Ölhobel (63) für die Brennkraftmaschine (1) bildet.

9. Modul nach einem der vorhergehenden Ansprüche, **dadurch gekennzeichnet, dass** der Grundkörper (17) eine Stützstruktur (69) für die Brennkraftmaschine (1) bildet.

10. Modul nach einem der vorhergehenden Ansprüche, **dadurch gekennzeichnet, dass** der Grundkörper (17) der Ölpumpe (75) zugeordnete Ölkanäle (79, 81) aufweist.

11. Modul nach einem der vorhergehenden Ansprüche, **dadurch gekennzeichnet, dass** an dem Grundkörper (17) insbesondere zur Regelung/Steuerung der Ölpumpe (75) ein Aktor, insbesondere ein selbst regelnder Aktor, angeordnet ist.

12. Brennkraftmaschine (1), insbesondere Hubkolbenmotor für Kraftfahrzeuge, mit einer in einem Kurbelgehäuse (3) drehbar gelagerten Kurbelwelle (5), die mindestens ein Abtriebsrad (9) aufweist, **dadurch gekennzeichnet, dass** ein Modul (15) nach einem oder mehreren der vorhergehenden Ansprüche derart an dem Kurbelgehäuse (3) befestigt ist, dass das eine Abtriebsrad (9) in der gemeinsamen Ebene der Antriebsräder (31, 35) liegt, und dass der Grundkörper (17) wenigstens mit der Ölstandsausgleichsöffnung (53) in ein Ölbad (47) einer Ölwanne der Brennkraftmaschine (1) eingetaucht angeordnet ist.

13. Brennkraftmaschine nach Anspruch 12, **dadurch gekennzeichnet, dass** die Kurbelwelle (5) ein weiteres Abtriebsrad aufweist, das in einer weiteren Ebene gemeinsam mit wenigstens einem Antriebsrad (85, 87) einer Nockenwelle (93, 95) liegt.

14. Brennkraftmaschine nach Anspruch 12, **dadurch gekennzeichnet, dass** das Antriebsrad (85, 87) wenigstens einer Nockenwelle (93, 95) in der gemeinsamen Ebene liegt und das Endloszugmittel (39), insbesondere Kettentrieb (41), von dem Abtriebsrad (9) angetrieben die Antriebsräder (31, 35, 85, 87) der Ausgleichswelle (19), der Ölpumpe (75) und der Nockenwelle (93, 95) antreibt/umschlingt.

## Claims

1. Module (15) for balancing inertial forces and/or torques of an internal combustion engine (1), having a base body (17) which can be attached to the internal combustion engine (1), and on which at least one balance shaft (19) with a first drive wheel (35) and an oil pump (75) with a second drive wheel (31) are arranged, wherein the first and the second drive wheels (31, 35) can be driven by a continuous traction means (39) in a common plane and are arranged at least essentially outside the base body (17), **characterized in that** at least one cover (49) which extends at least over the drive wheels (31, 35) is arranged on the base body (17), which can dip, at least in some areas, into an oil bath (47) of an oil pan of the internal combustion engine (1), which cover (49) has an oil level compensation opening (53) which can be arranged in the oil bath (47) by dipping, and **in that** the oil level compensation opening (53) is assigned a switchable and/or adjustable valve.

2. Module according to Claim 1, **characterized in that** the cover (49) has at least one opening for the continuous traction means (39).

3. Module according to one of Claims 1 and 2, **characterized in that** the cover (49) is releasably attached to the base body (17).

4. Module according to one of the preceding claims, **characterized in that** the cover (49) is embodied in one piece with the base body (17).

5. Module according to one of the preceding claims, **characterized in that** the through-flow face of the oil level compensation opening (53) is selected in accordance with a lubricant demand, at least for the drive wheels (31, 35) and the continuous traction means (39).

6. Module according to one of the preceding claims, **characterized in that** the drive wheels (31, 35) are embodied as chain wheels (33, 37), and the continuous traction means (39) are embodied as a chain drive (41).

7. Module according to one of the preceding claims, **characterized in that** the oil pump (75) is embodied integrated into the base body (17) or is attached thereto as a separately embodied pump unit.

8. Module according to one of the preceding claims, **characterized in that** the base body (17) forms an oil separator (63) for the internal combustion engine (1).

9. Module according to one of the preceding claims, **characterized in that** the base body (17) forms a support structure (69) for the internal combustion engine (1).

10. Module according to one of the preceding claims, **characterized in that** the base body (17) of the oil pump (75) has assigned oil ducts (79, 81).

11. Module according to one of the preceding claims, **characterized in that** an actuator, in particular a self-regulating actuator, is arranged on the base body (17), in particular for forming close-loop/open-loop control of the oil pump (75).

12. Internal combustion engine (1), in particular reciprocating piston engine for motor vehicles, having a crankshaft (5) which is rotatably mounted in a crank housing (3) and which has at least one output wheel (9), **characterized in that** a module (15) according to one of more of the preceding claims is attached to the crank housing (3) in such a way that the one output wheel (9) lies in the common plane of the drive wheels (31, 35) and **in that** the base body (17) is arranged with at least the oil level compensation opening (53) dipped into an oil bath (47) of an oil pan of the internal combustion engine (1).

13. Internal combustion engine according to Claim 12, **characterized in that** the crankshaft (5) has a further output wheel which lies in a further plane together with at least one drive wheel (85, 87) of a camshaft (93, 95).

14. Internal combustion engine according to Claim 12, **characterized in that** the drive wheel (85, 87) of at least one camshaft (93, 95) lies in the common plane, and the continuous traction means (39), in particular train drive (41), drives/wraps around the drive wheels (31, 35, 85, 87) of the balance shaft (19), of the oil pump (75) and of the camshaft (93, 95), while being driven by the output wheel (9).

## Revendications

1. Module (15) pour compenser des forces inertielles et/ou des couples d'un moteur à combustion interne (1), avec un corps de base (17), qui peut être installé sur le moteur à combustion interne (1), et sur lequel sont disposés au moins un arbre de compensation (19) avec une première roue d'entraînement (35) et une pompe à huile (75) avec une deuxième roue d'entraînement (31), dans lequel la première et la deuxième roues d'entraînement (31, 35) sont disposées dans un plan commun au moins essentiellement à l'extérieur du corps de base (17) en pouvant être entraînées par un moyen de traction sans fin (39), **caractérisé en ce que** sur le corps de base (17) pouvant être immergé au moins localement dans un bain d'huile (47) d'un carter d'huile du moteur à combustion interne (1) est disposé au moins un couvercle (49) s'étendant au moins au-dessus des roues d'entraînement (31, 35), qui présente une ouverture de compensation de niveau d'huile (53) pouvant être disposée dans le bain d'huile (47) par l'immersion, et **en ce qu'**une soupape commutable et/ou réglable est associée à l'ouverture de compensation de niveau d'huile (53).

2. Module selon la revendication 1, **caractérisé en ce que** le couvercle (49) présente au moins une ouverture pour le moyen de traction sans fin (39).

3. Module selon l'une des revendications 1 ou 2, **caractérisé en ce que** le couvercle (49) est fixé au corps de base (17) de façon détachable.

4. Module selon l'une quelconque des revendications précédentes, **caractérisé en ce que** le couvercle (49) est formé d'une seule pièce avec le corps de base (17).

5. Module selon l'une quelconque des revendications précédentes, **caractérisé en ce que** la section de passage de l'ouverture de compensation de niveau d'huile (53) est choisie en correspondance avec une consommation de lubrifiant pour les roues d'entraînement (31, 35) et le moyen de traction sans fin (39).

6. Module selon l'une quelconque des revendications précédentes, **caractérisé en ce que** les roues d'entraînement (31, 35) sont des roues à chaîne (33, 37) et le moyen de traction sans fin (39) est un entraînement par chaîne (41).

7. Module selon l'une quelconque des revendications précédentes, **caractérisé en ce que** la pompe à huile (75) est réalisée sous forme intégrée dans le corps de base (17) ou est fixée à celui-ci comme une unité de pompe réalisée séparément.

8. Module selon l'une quelconque des revendications précédentes, **caractérisé en ce que** le corps de base (17) forme un plateau anti-barbotage (63) pour le moteur à combustion interne (1).

9. Module selon l'une quelconque des revendications précédentes, **caractérisé en ce que** le corps de base (17) forme une structure de support (69) pour le moteur à combustion interne (1).

10. Module selon l'une quelconque des revendications précédentes, **caractérisé en ce que** le corps de base (17) présente des canaux d'huile (79, 81) associés à la pompe à huile (75).

11. Module selon l'une quelconque des revendications précédentes, **caractérisé en ce qu'**un actionneur, en particulier un actionneur autorégulateur, est disposé sur le corps de base (17), en particulier pour la régulation/commande de la pompe à huile (75).

12. Moteur à combustion interne (1), en particulier moteur à piston pour véhicules automobiles, avec un vilebrequin (5) monté de façon rotative dans un carter de vilebrequin (3), qui présente au moins une roue de sortie (9), **caractérisé en ce qu'**un module (15) selon une ou plusieurs des revendications précédentes est fixé au carter de vilebrequin (3) de telle manière que ladite une roue de sortie (9) se trouve dans le plan commun des roues d'entraînement (31, 35) et **en ce que** le corps de base (17) est disposé en immersion au moins avec l'ouverture de compensation de niveau d'huile (53) dans un bain d'huile (47) d'un carter d'huile du moteur à combustion interne (1).

13. Moteur à combustion interne selon la revendication 12, **caractérisé en ce que** le vilebrequin (5) présente une autre roue de sortie, qui est située dans un autre plan en commun avec au moins une roue d'entraînement (85, 87) d'un arbre à cames (93, 95).

14. Moteur à combustion interne selon la revendication 12, **caractérisé en ce que** la roue d'entraînement (85, 87) d'au moins un arbre à cames (93, 95) se trouve dans le plan commun et le moyen de traction sans fin (39), en particulier l'entraînement par chaîne (41), entraîné par la roue de sortie (9), entraîne/embrasse les roues d'entraînement (31, 35, 85, 87) de l'arbre de compensation (19), de la pompe à huile (75) et de l'arbre à cames (93, 95).
